# FASCICULE DE BREVET EUROPEEN

(11) **EP 3 196 541 B1**
(45) Date de publication et mention de la délivrance du brevet: **11.05.2022**
(21) Numéro de dépôt: 17152170.1
(22) Date de dépôt: 19.01.2017
(51) Int. Cl.: F21S 41/686

(54) **MÉCANISME DE COUPURE POUR PROJECTEUR DE VÉHICULE AUTOMOBILE, ACTIONNÉ PAR UN ÉLECTROAIMANT À DEUX ENTREFERS**
TRENNMECHANISMUS FÜR SCHEINWERFER EINES KRAFTFAHRZEUGS, DER DURCH EINEN ELEKTROMAGNETEN MIT ZWEI LUFTSPALTEN BETÄTIGT WIRD
SHUT-OFF MECHANISM FOR MOTOR VEHICLE HEADLIGHT, ACTUATED BY AN ELECTROMAGNET WITH TWO AIR GAPS

(30) Priorité: 20.01.2016 FR 1650441
(43) Date de publication de la demande: 26.07.2017
(73) Titulaire: AML Systems, 75008 Paris (FR)
(72) Inventeur: NORONHA, Anderson, 94120 Fontenay sous bois (FR); CHIATTELLI, Claudio, 93150 Le Blanc-Mesnil (FR); KOULOUH, Hassan, 93310 Le Pre Saint Gervais (FR)
(74) Mandataire: Gevers & Orès

(56) Documents cités:
- EP-A1- 2 180 245
- EP-A2- 2 461 093
- WO-A1-2016/097505

## Description

Le domaine de la présente invention est celui des projecteurs de lumière et, plus particulièrement, celui des projecteurs pour véhicule automobile.

Les projecteurs de véhicule automobile comprennent généralement un réflecteur dans lequel sont disposés une source lumineuse et des moyens de contrôle de la forme du faisceau pour adapter celui-ci aux circonstances de la conduite.

Il est connu d'utiliser une barrette (ou lame) de coupure permettant diverses phases d'occultation du faisceau lumineux. La barrette de coupure est actionnée électriquement pour se déplacer, sur commande, entre au moins deux positions angulaires dans lesquelles elle occulte plus ou moins le faisceau lumineux. Ceci permet de limiter la portée du projecteur, par exemple à celle des feux de croisement, dite position code, pour ne pas éblouir les conducteurs circulant en sens inverse, ou encore à celle des feux de route, dite position route, dans laquelle il n'y a pas d'occultation.

Les dispositifs de l'art antérieur qui commandent la position de la barrette de coupure sont généralement constitués par un moteur d'actionnement associé à un capteur de la position de la barrette de coupure ou à une butée qui définit la position de repos de la barrette de coupure. Pour des raisons de sécurité, cette position de repos est associée à la position code, afin d'éviter un éblouissement des conducteurs venant en sens inverse dans le cas d'une panne du dispositif d'actionnement de la barrette. Le rappel sur la position de butée ou sur la position extrême est généralement assuré par un ressort.

Pour la réalisation des moteurs d'actionnement, il est connu d'utiliser un électroaimant qui exerce, à l'encontre d'un ressort de rappel, une force d'attraction sur un équipage mobile lié à la barrette de coupure. Il comprend également une carcasse métallique qui forme un berceau pour l'électroaimant et qui assure son bouclage magnétique. L'électroaimant comprend une bobine d'induction formée par des spires qui sont alimentées en courant électrique pour actionner le moteur, et un noyau ferromagnétique qui est placé au centre du bobinage. Ce noyau est fixe longitudinalement dans la bobine et a pour fonction de servir de point d'attraction pour l'équipage mobile lorsque la bobine est alimentée.

Un des problèmes rencontrés avec un tel électroaimant est que le noyau ferromagnétique, même s'il est réalisé en fer ou en acier doux, se magnétise quelque peu pendant le passage du courant et qu'il conserve un magnétisme rémanent après la coupure du courant. On assiste alors à un phénomène de collage de l'équipage mobile pendant un temps qui, même s'il est très court, reste incompatible des délais de réaction qui sont demandés pour la rotation d'une barrette de coupure d'un mécanisme de coupure.

Le document EP 2 180 245 décrit un mécanisme de coupure pour des phares comprenant une barrette portée par un équipage mobile et un moteur d'actionnement dudit équipage avec un électroaimant.

Des solutions ont été proposées, telles que l'introduction d'un matériau non ferromagnétique, comme par exemple du cuivre, entre le noyau de l'électroaimant et l'équipage mobile, ou bien une disposition qui tend à augmenter le couple de rappel sur cet équipage mobile. Il peut s'agir, pour cela, d'une augmentation de la force de rappel du ressort ou d'une augmentation du bras de levier par lequel ce ressort agit. Ces solutions ont pour désavantage, soit d'être relativement chères (cas du cuivre), soit de nécessiter un électroaimant de taille supérieure, ce qui n'est pas souhaitable tant sur le plan du prix que de celui de l'encombrement.

La présente invention a donc pour but de proposer un mécanisme de commande d'une barrette de coupure qui ne présente pas les inconvénients de l'art antérieur et notamment qui, en restant à bas coût, n'est pas sensible au phénomène de rémanence magnétique et, par conséquent, ne présente pas de collage de l'équipage mobile à la coupure du courant.

A cet effet, l'invention a pour objet un mécanisme de coupure pour projecteur de véhicule automobile, tel que défini dans la revendication indépendante 1, ledit mécanisme comportant un ensemble mobile comprenant une barrette de coupure et un équipage mobile portant la barrette de coupure, la barrette de coupure étant configurée pour pouvoir obturer plus ou moins un faisceau lumineux de manière à changer le mode de fonctionnement optique dudit projecteur, ledit mécanisme comprenant en outre un moteur d'actionnement dudit équipage mobile, le moteur d'actionnement comportant un électroaimant comprenant une bobine d'induction associée à un noyau ferromagnétique fixe positionné en son centre et à une carcasse métallique entourant ladite bobine d'induction, ledit équipage mobile étant mobile sous l'action dudit électroaimant, à l'encontre d'au moins un ressort de rappel, entre une entourant ladite bobine d'induction, ledit équipage mobile étant mobile sous l'action dudit électroaimant, à l'encontre d'au moins un ressort de rappel, entre une première position à proximité et une seconde position à distance via un premier entrefer dudit noyau ferromagnétique.

Selon l'invention, ledit équipage mobile est configuré pour créer une rupture dans la continuité d'un circuit magnétique formé par ledit noyau ferromagnétique, ladite carcasse métallique et ledit équipage mobile, lorsqu'il arrive à proximité dudit noyau ferromagnétique (sans contact avec ledit noyau ferromagnétique) dans ladite première position.

Cette rupture évite que les pièces ferromagnétiques constituant le moteur de commande ne se magnétisent pendant l'activation du moteur d'actionnement et ne restent coller, même temporairement l'une à l'autre lors de l'arrêt de cette activation.

De façon préférentielle, ladite rupture de continuité forme un second entrefer dans ledit circuit magnétique. De façon plus préférentielle, ledit circuit magnétique génère dans ledit second entrefer une force d'attraction sur l'équipage mobile qui tend à le maintenir à proximité du noyau ferromagnétique (dans ladite première position). Cette force supplémentaire permet de dimensionner la force principale d'attraction à une valeur plus réduite.

Avantageusement, l'équipage mobile comprend une plaque ferromagnétique formée par une plaque supérieure et une plaque inférieure s'étendant de part et d'autre d'un axe de rotation, et ladite plaque inférieure se rapproche d'une branche de la carcasse métallique, jusqu'à créer ledit second entrefer, lors d'une rotation amenant la plaque supérieure à proximité du noyau ferromagnétique dans la première positon de l'équipage mobile.

Selon l'invention, ladite carcasse métallique comprend au moins un élément d'attraction configuré pour faciliter l'attraction de l'équipage mobile afin de l'attirer dans ladite première position.

Avantageusement, l'élément d'attraction est agencé d'un côté d'une branche centrale de la carcasse métallique au niveau de l'extrémité inférieure de la plaque inférieure de la plaque ferromagnétique, en étant recourbé vers ladite plaque inférieure, et en étant agencé latéralement de manière à ne pas venir au contact de la plaque inférieure lors de la rotation de l'équipage mobile. De préférence, l'élément d'attraction représente une lamelle partiellement découpée dans la branche centrale de la carcasse métallique et recourbée vers ladite plaque inférieure dans la seconde position de l'équipage mobile.

Dans un mode de réalisation particulier, la carcasse métallique comprend au moins un élément d'attraction de chacun des côtés de la branche centrale.

Par ailleurs, dans un mode de réalisation préféré, l'ensemble mobile est configuré pour présenter une répartition de charge permettant d'obtenir une position d'équilibre par rapport à un axe de rotation dudit équipage mobile qui est mobile en rotation.

De préférence, la répartition de charge est générée par un ajout ou un retrait de matière à au moins l'une desdites plaques supérieure et inférieure de la plaque ferromagnétique.

En équilibrant ainsi les masses (ou charges) de l'équipage mobile et de la barrette de coupure autour de l'axe de rotation, la force d'attraction nécessaire pour faire tourner l'ensemble mobile peut être relativement faible, et peut être générée à l'aide d'un électroaimant de faible dimension.

Par ailleurs, dans un mode de réalisation préféré, la barrette de coupure est liée par une première extrémité longitudinale à l'équipage mobile, et elle est pourvue vers une seconde extrémité longitudinale, opposée à cette première extrémité longitudinale, d'une butée flexible.

De préférence, ladite butée flexible comprend une lamelle formée longitudinalement dans le corps de la barrette de coupure.

L'invention porte également sur un projecteur pour véhicule automobile comprenant au moins un mécanisme de coupure tel que décrit ci-dessus.

L'invention sera mieux comprise, et d'autres buts, détails, caractéristiques et avantages de celle-ci apparaîtront plus clairement au cours de la description explicative détaillée qui va suivre, de modes de réalisation de l'invention donnés à titre d'exemple purement illustratif et non limitatif, en référence aux dessins schématiques annexés. Sur ces dessins :
- la figure 1 est une vue en perspective d'un élément d'un phare de véhicule comportant un mécanisme de coupure ;
- les figures 2 et 3 sont des vues de face du mécanisme de coupure de la figure 1, positionné sur une armature, respectivement dans la position de route et de code ;
- la figure 4 est une vue en perspective d'un mécanisme de coupure selon un mode de réalisation de l'invention, en version assemblée ;
- la figure 5 est une vue éclatée montrant, en perspective, les divers éléments constituant le mécanisme de coupure de la figure 4 ;
- les figures 6 et 7 sont des vues schématiques d'un moteur d'actionnement du mécanisme de coupure, respectivement dans une position de repos et dans une position d'activation, selon un premier mode de réalisation ;
- les figures 8 et 9 sont des vues schématiques du moteur d'actionnement du mécanisme de coupure, respectivement dans une position de repos et dans une position d'activation, selon un second mode de réalisation ; et
- la figure 10 est une vue de face d'une extrémité d'une barrette de coupure.

Dans la description qui va suivre, les références longitudinales ou latérales se comprennent en référence à l'axe optique du réflecteur et les termes avant ou arrière renvoient à la direction dans laquelle se propage le faisceau lumineux.

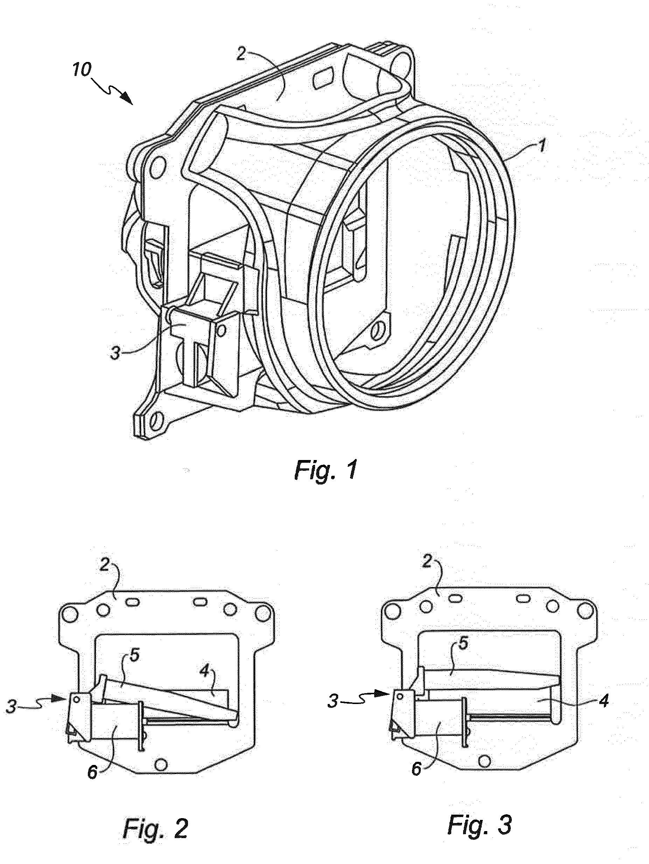

En se référant à la figure 1, on voit la partie avant d'un projecteur 10 de véhicule automobile comprenant un porte-lentille 1 de forme cylindrique qui s'étend vers l'avant à partir d'une armature 2 de forme rectangulaire. Celle-ci s'étend dans un plan perpendiculaire à l'axe optique du faisceau et est découpée en son centre pour laisser passer ledit faisceau. Sur cette armature est fixé le mécanisme de coupure dont la fonction est d'obturer plus ou moins le faisceau en fonction des conditions de circulation du véhicule. De façon non visible, sont disposés en arrière de cette armature, une source lumineuse génératrice du faisceau et un réflecteur qui oriente ce faisceau vers l'avant et vers la lentille (non illustrée) qui est installée à l'extrémité avant du porte-lentille 1.

En se référant aux figures 2 et 3 on voit, en vue de face, respectivement en position de route et en position de code, le mécanisme de coupure 3 qui est monté en position basse sur l'armature 2. Cette armature 2 comporte, en partie basse de sa découpe centrale, un cache fixe 4 qui obture en partie cette découpe et devant lequel peut se mouvoir une barrette (ou lame) de coupure 5 pour moduler la forme du faisceau en sortie du projecteur 10. Cette barrette de coupure 5 est mobile en rotation dans un plan perpendiculaire au faisceau lumineux et est mue par un moteur d'actionnement 6.

Sur la figure 2, correspondant à la position de route, la barrette de coupure 5 est escamotée, c'est-à-dire qu'elle est inclinée vers le bas et laisse apparaître le cache fixe 4, ce qui laisse passer la quasi-totalité du faisceau lumineux. Sur la figure 3, correspondant à la position code, la barrette est relevée et elle coupe le faisceau sur une plus grande hauteur que ne le ferait le seul cache fixe 4. Après son renversement par la lentille, le faisceau est alors orienté vers le bas, ce qui évite d'éblouir les conducteurs des véhicules venant en sens inverse.

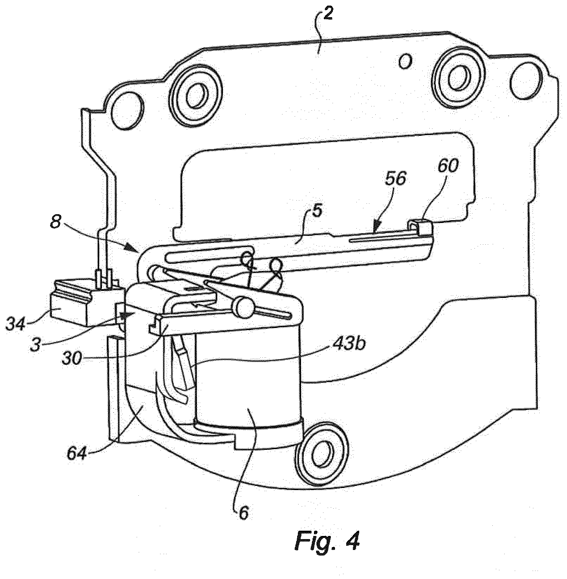

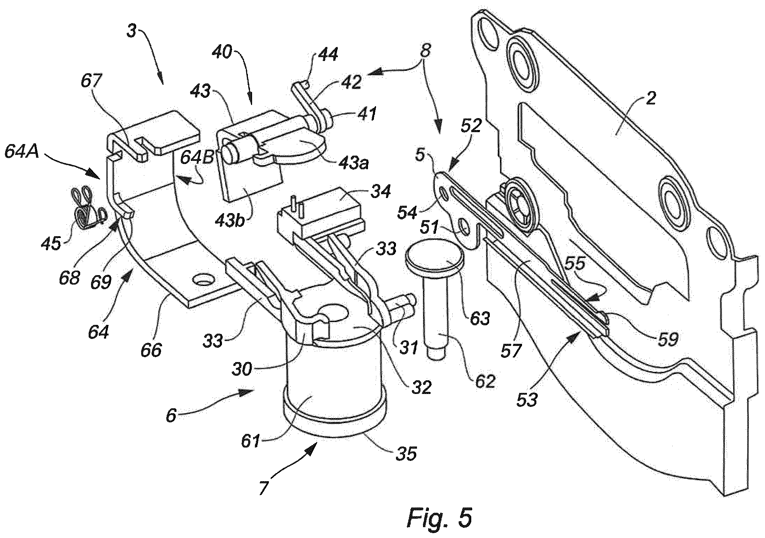

Les figures 4 et 5 montrent le mécanisme de coupure 3 selon un mode de réalisation, respectivement, en position assemblée et en position éclatée.

Ce mécanisme de coupure 3 comporte la barrette (ou lame) de coupure 5 qui est mobile en rotation autour d'un premier tenon 31 rattaché à une structure fixe 30 liée à l'armature 2. Elle pivote autour du premier tenon 31, en réponse à une commande du moteur d'actionnement, sous l'action d'un bras de levier 42 d'un équipage mobile 40, comme précisé ci-dessous. Cet équipage mobile 40 forme avec la barrette de coupure 5 et les moyens pour les lier ensemble, un ensemble mobile 8 qui est mobile en rotation.

Cette structure fixe 30 comprend une platine 32, à laquelle est attaché un bobinage d'électroaimant 61 qui est alimenté, en tant que de besoin, en courant électrique pour mettre en rotation ou relâcher l'ensemble mobile 8 comprenant l'équipage mobile 40 et la barrette de coupure 5. Elle comprend également deux supports 33, qui sont liés à la platine 32, et qui ont pour fonction de recevoir un axe de rotation 41 lié à l'équipage mobile 40 qui entraîne la barrette de coupure 5. Elle comprend de plus un connecteur électrique 34, par lequel transite le courant de commande de l'électroaimant.

Dans le mode de réalisation particulier représenté, les deux supports 33 présentent, chacun, la forme d'une pièce en V avec deux montants qui s'écartent progressivement l'un de l'autre pour former un guide lors de l'introduction de l'axe de rotation 41 de l'équipage mobile. Le fond du V comporte une découpe cylindrique servant de logement pour cet axe de rotation 41 une fois qu'il est mis en place sur la structure fixe 30. Le diamètre de cette découpe cylindrique est légèrement supérieur à l'écartement des deux branches en fond du V, de façon à former un clipsage de retenue pour cet axe de rotation après son introduction.

Le moteur d'actionnement 6 pour actionner la barrette de coupure 5 comporte un électroaimant 7. Cet électroaimant 7 comprend, de façon usuelle, un bobinage (ou bobine d'induction) 61, qui est attaché à la platine 32 à sa partie supérieure et à un seconde platine 35 à sa partie inférieure, et un noyau ferromagnétique 62 fixe, sensiblement cylindrique, qui est placé au centre de ce bobinage, le long de son axe de symétrie. Ce noyau ferromagnétique 62 porte à son extrémité supérieure, une plaque circulaire 63, de diamètre supérieur à celui du noyau 62, qui dépasse de la platine 32 et sert de pôle d'attraction à l'équipage mobile 40. Ce noyau ferromagnétique 62 est positionné de façon fixe à l'intérieur du bobinage 61 et sert de guide, à l'intérieur du bobinage, aux lignes de force électromagnétiques qui sont générées par le passage d'un courant dans l'électroaimant du moteur 6. Ces lignes de force servent à générer une attraction de l'équipage mobile 40 par la plaque circulaire 63.

Le moteur d'actionnement 6 comprend, en outre, une carcasse métallique 64, en forme de U, qui entoure le bobinage 61 et qui a pour objet, de façon usuelle, de servir de guide aux lignes de force électromagnétiques à l'extérieur de la bobine 61. Alors que la branche centrale 65 de la carcasse métallique 64, formée par le fond du U, s'étend parallèlement à l'axe de la bobine 61, sa branche inférieure 66 vient au contact de la seconde platine 35, au niveau du pied du noyau ferromagnétique 62, et sa branche supérieure 67 revient vers l'axe de la bobine 61, dans sa partie supérieure, en restant cependant à distance de la plaque circulaire 63 du noyau 62.

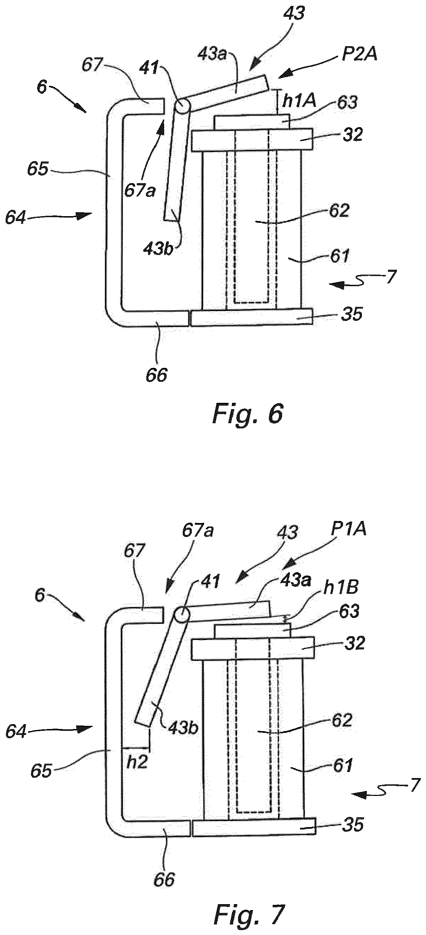

Entre l'extrémité terminale (libre) 67a de la branche supérieure 67 de la carcasse métallique 64 et la plaque circulaire 63 est positionné l'équipage mobile 40 (figures 6 et 7), dont les caractéristiques sont décrites ci-dessous.

L'équipage mobile 40 comprend principalement une plaque ferromagnétique 43 mobile, en forme de L, dont l'objet est, d'une part, d'assurer une continuité dans le guidage des lignes de force électromagnétiques, dans le prolongement de la carcasse métallique 64 et notamment en direction de l'axe de la bobine 61, et d'autre part, de maintenir un entrefer ouvert dans ce circuit, que cette plaque ferromagnétique 43 mobile soit éloignée ou non de la plaque circulaire 63 fixe du noyau ferromagnétique de la bobine d'induction 61. Pour cela, une des branches de la plaque ferromagnétique 43, dite plaque supérieure 43a, est alignée sensiblement avec la branche supérieure 67 de la carcasse métallique 64, entre l'extrémité terminale 67a de cette branche supérieure 67 et le noyau ferromagnétique 62, tandis que son autre branche, dite plaque inférieure 43b, est sensiblement parallèle à la branche centrale 65 de cette carcasse métallique 64. Ce quasi-parallélisme des deux parties de la plaque ferromagnétique 43 mobile avec les branches centrale et supérieure de la carcasse métallique 64 permet de donner une certaine continuité au circuit magnétique autour de la bobine 61 de l'électroaimant.

La plaque ferromagnétique 43 est mobile en rotation et porte à cet effet, sur sa plaque supérieure 43a, un axe de rotation 41, autour duquel tourne tout l'équipage mobile 40. Cet axe de rotation 41 est situé à une distance relativement courte de l'extrémité (supérieure) de la plaque supérieure 43a, qui est située en face de la plaque circulaire 63, de façon à réduire le bras de levier d'actionnement de l'équipage mobile 40 par la force d'attraction exercée par le noyau ferromagnétique 62. Ce bras de levier court permet de réduire la taille de l'électroaimant 7. De façon préférentielle, l'axe de rotation 41 se situe latéralement au-dessus de la bobine 61, à l'intérieur du prolongement du cylindre formé par celle-ci.

Sur cet axe de rotation 41 est positionné un ressort de rappel 45, qui prend appui sur la structure fixe 30 et qui tend à rappeler la plaque supérieure 43a de l'équipage mobile 40 à distance de la plaque circulaire 63 du noyau ferromagnétique 62 quand aucun courant ne circule dans le bobinage.

Par ailleurs, à partir de cet axe de rotation 41 s'étend radialement, sur le côté de la plaque mobile 43, un bras 42 formant levier pour la mise en rotation de l'ensemble mobile 8, c'est-à-dire de la barrette de coupure 5 et de l'équipage mobile 40. A cette fin, dans le mode de réalisation représenté sur les figures 4 et 5, la barrette de coupure 5 comporte un premier trou cylindrique 51, dans lequel vient se loger le premier tenon 31 qui sert de pivot à la barrette de coupure 5, et un second trou cylindrique 54, dans lequel vient se loger un second tenon 44 qui s'étend à l'extrémité de ce bras 42, parallèlement à l'axe de rotation 41, pour servir de moyen d'actionnement à ladite barrette de coupure 5.

Les figures 6 et 7 montrent la disposition relative de la plaque mobile 43 et de la carcasse métallique 64, respectivement, dans les deux positions P1A et P2A que peut prendre l'équipage mobile 40, c'est-à-dire, d'une part, dans une position P2A dite de repos (figure 6), et d'autre part dans une position P1A dite d'activation (figure 7), sous l'action du passage d'un courant dans la bobine 61.

Dans la position de repos P2A (figure 6), aucun courant ne passe dans le bobinage 61 et le noyau ferromagnétique 62 n'exerce aucune attraction sur la plaque mobile 43. La plaque supérieure 43a de celle-ci est alors éloignée de la plaque circulaire 63 du noyau ferromagnétique 62, sous l'action du ressort de rappel 45. Il n'apparaît pas de contact entre ces deux pièces qui sont séparées l'une de l'autre par un premier entrefer h1A. Les lignes de force du circuit magnétique en partant du noyau ferromagnétique 62, passent ainsi par la carcasse métallique 64 puis par la plaque supérieure 43a et se referment sur le noyau 62 au travers du premier entrefer h1A.

Dans la position d'activation P1A (figure 7) où un courant circule dans la bobine 61, le noyau ferromagnétique 62 attire la plaque supérieure 43a de la plaque mobile 43, qui s'approche dudit noyau ferromagnétique 62 à l'encontre du ressort de rappel 45. Le premier entrefer est alors réduit (h1B) mais non nul. De plus, la plaque inférieure 43b se rapproche de la branche centrale 65 de la carcasse métallique 64 au point de créer avec elle un second entrefer h2, sans contact. Dans cette configuration, les lignes de force en partant du noyau ferromagnétique 62, passent par la branche inférieure 66 puis par la partie basse de la branche centrale 65 de la carcasse métallique 64 ; elles traversent alors l'entrefer h2 pour suivre ensuite la plaque inférieure 43b puis la plaque supérieure 43a et refermer le circuit via l'entrefer h1B réduit entre cette plaque supérieure 43a et la plaque circulaire 63.

Dans les deux cas, le circuit magnétique comporte au moins un entrefer (h1A ; h1B, h2) qui ouvre le circuit magnétique et empêche que ses composants se magnétisent quand le bobinage est alimenté, ce qui élimine le risque de collage de la plaque supérieure 43a contre la plaque circulaire 63.

L'équipage mobile 40 est donc mobile sous l'action de l'électroaimant 7, à l'encontre du ressort de rappel 45, entre une première position (d'activation) à proximité et une seconde position de repos à distance via le premier entrefer h1A, dudit noyau ferromagnétique 62.

Selon l'invention, l'équipage mobile 40 est configuré pour créer une rupture dans la continuité du circuit magnétique formé par le noyau ferromagnétique 62, la carcasse métallique 64 et l'équipage mobile 40, lorsque l'équipage mobile 40 arrive à proximité dudit noyau ferromagnétique 62 dans ladite position d'activation P1A.

La position d'activation dite à proximité (c'est-à-dire sans contact) correspond à une position pour laquelle il existe un court entrefer h1B entre la plaque supérieure 43a et la plaque circulaire 63 comme représenté notamment sur la figure 7.

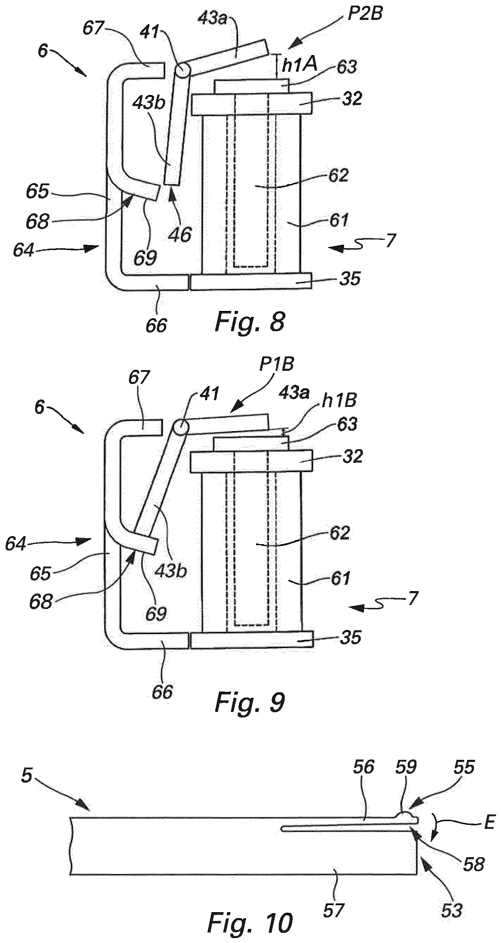

Par ailleurs, dans un mode de réalisation particulier, la carcasse métallique 64 comprend, comme représenté sur les figures 8 et 9, au moins un élément d'attraction 68. Cet élément d'attraction 68 correspond à un élément saillant qui est configuré pour faciliter l'attraction de l'équipage mobile 40 lorsque ce dernier est amené de la position de repos P2B (figure 8) à la position d'activation P1B (figure 9). Les figures 8 et 9 sont similaires aux figures 6 et 7, avec notamment des positions nommées P1B et P2B au lieu de P1A et P2A.

L'élément d'attraction 68 est agencé d'un côté 64A de la branche centrale 65 (figure 5) de la carcasse métallique 64 au niveau de l'extrémité inférieure 46 de la plaque inférieure 43b de la plaque ferromagnétique 43 (figure 8). L'élément d'attraction 68 est un élément saillant qui est recourbé vers ladite plaque inférieure 43b de la plaque ferromagnétique 43, et est agencé latéralement de manière à ne pas venir au contact de la plaque inférieure 43b lors de la rotation de l'équipage mobile 40. Ainsi formé et positionné, l'élément d'attraction 68 permet tout d'abord, à partir de la position P2B de la figure 8, lorsqu'un courant vient alimenter l'électroaimant, de participer à l'attraction de la plaque inférieure 43b, puis de maintenir un entrefer constant.

Dans le mode de réalisation représenté, l'élément d'attraction 68 saillant représente une lamelle 69 partiellement découpée dans la branche centrale 65 de la carcasse métallique 64 et recourbée vers ladite plaque inférieure 43b dans la position P2B de l'équipage mobile 40.

Dans une variante de réalisation (non représentée), la carcasse métallique 64 peut comprendre un tel élément d'attraction de chacun des côtés 64A et 64B de la branche centrale 65.

Par ailleurs, dans un mode de réalisation particulier, ledit ensemble mobile 8 est configuré pour présenter une répartition de charge permettant d'obtenir une position d'équilibre par rapport à l'axe de rotation 41 de l'équipage mobile 40.

En équilibrant ainsi les masses de l'équipage mobile 40 et de la barrette de coupure 7 autour de cet axe de rotation 41, la force d'attraction nécessaire pour faire tourner l'ensemble de rotation 8 peut être relativement faible. On peut ainsi utiliser une bobine d'induction 61 de faible dimension, ce qui procure des avantages en termes de coût et d'encombrement notamment.

Dans un mode de réalisation préféré, cette répartition de charge est générée par un ajout et/ou un retrait de matière à au moins l'une desdites plaques supérieure 43a et inférieure 43b de la plaque ferromagnétique 43 et/ou à la barrette de coupure 5. La répartition de charge peut être obtenue par une adaptation de l'épaisseur d'une des pièces précitées ou par tout autre moyen usuel.

Par ailleurs, dans un mode de réalisation particulier, représenté notamment sur les figures 4, 5 et 10, la barrette de coupure 5 est pourvue d'une butée 55 flexible à une extrémité longitudinale 53, opposée à l'extrémité longitudinale 52 à laquelle la barrette de coupure 5 est liée à l'équipage mobile.

Comme représenté sur la figure 10, la butée 55 comprend une lamelle 56 qui est formée par une découpe longitudinale 58 (selon l'extension longitudinale de la barrette de coupure 5) pratiquée dans le corps 57 de la barrette de coupure 5 à proximité de son bord supérieur.

Cette lamelle 56 ainsi formée est flexible dans la direction illustrée par une flèche E sur la figure 10. La lamelle 56 est pourvue d'un bourrelet 59 saillant destiné à venir au contact d'un arrêt 60 (figure 4), en forme d'étrier et solidaire de l'armature 2, lorsque l'équipage mobile revient dans la position de repos.

La lamelle 56 flexible permet de réduire les vibrations générées dans la barrette de coupure 5 lors de son contact avec l'arrêt 60. La butée 55 permet ainsi de réduire le bruit lors du retour de l'équipage mobile dans la position de repos.

On va maintenant décrire le fonctionnement du mécanisme de coupure 3 tel que décrit ci-dessus.

L'équipage mobile 40, dans sa position de repos, est éloigné du noyau ferromagnétique 62 sous l'action du ressort de rappel 45 et laisse un entrefer h1A (figures 6 et 8) entre sa plaque supérieure 43a et la plaque circulaire 63 de ce noyau. Cet entrefer est choisi d'une dimension relativement faible pour que la plaque supérieure 43a puisse être attirée par le noyau ferromagnétique 62 grâce à un courant de faible intensité dans la bobine 61. La bobine 61 de l'électroaimant 7 peut ainsi être choisie de faible dimension. Parallèlement, la plaque inférieure 43b est relativement éloignée de la carcasse métallique 64.

Lorsqu'un courant est envoyé dans la bobine 61 pour déclencher le passage en position de route pour le projecteur, la plaque supérieure 43a est attirée vers la plaque circulaire 63. Les deux pièces s'approchent l'une de l'autre et l'équipage mobile 40 est conformé de façon que la plaque inférieure 43b ne vienne pas en contact avec la carcasse métallique 64 en formant le second entrefer h2. Ainsi, le circuit magnétique généré par l'électroaimant ne se referme pas. On évite de ce fait une magnétisation de la plaque mobile 43 et une rémanence qui produirait un effet de collage de la plaque mobile 43 sur la plaque circulaire 63.

Par ailleurs, l'espace laissé libre entre la plaque inférieure 43b et la branche centrale de la carcasse métallique 64 est calibré de façon à former un entrefer h2 relativement petit entre ces deux pièces. Comme le circuit magnétique, en position d'activation du mécanisme de coupure, passe par cette plaque inférieure et cette branche centrale, une attraction se crée entre ces deux pièces. Cette force s'ajoute à celle d'attraction de la plaque supérieure 43a vers la plaque circulaire 63 et permet de garantir une permanence de la position entre la plaque mobile et le noyau ferromagnétique. Cette force supplémentaire permet, par exemple, de prendre en compte les soubresauts dus aux cahots de la route, qui pourraient désolidariser ces deux pièces. Cette force d'attraction supplémentaire est augmentée par la position et l'action de l'élément d'attraction 68. Il n'est alors pas besoin de sur-dimensionner la force d'attraction principale liée au premier entrefer h1A pour tenir compte de ces aléas.

La double attraction créée par les deux entrefers permet de réduire la taille de la bobine 61 et globalement de tout l'électroaimant 7, et donc du moteur d'actionnement 6 de la barrette de coupure 5.

On note enfin, que l'équipage mobile 40 soit en position de repos ou en position d'activation, que le circuit magnétique passe par l'axe de rotation 41. Dans un cas, celui-ci court le long de la branche supérieure de la carcasse pour rejoindre la plaque supérieure 43a au niveau de cet axe de rotation. Dans l'autre cas, il circule sur la partie basse de la branche centrale de la carcasse métallique 64 puis sur la plaque mobile 43 et donc passe par l'axe de rotation 41. Cette situation donne toute liberté pour positionner latéralement l'axe de rotation 41, du moment qu'il reste dans ce circuit magnétique. On peut ainsi le placer au plus près de la plaque circulaire 63, et donc diminuer fortement le bras de levier qui actionne la rotation de l'équipage mobile 40. Dans un mode préférentiel (non illustré), l'axe de rotation 41 est positionné latéralement au dessus de la bobine 61, de façon sécante avec le cylindre prolongeant celle-ci vers le haut ou vers le bas.

## Revendications

1. Mécanisme de coupure pour projecteur de véhicule automobile, ledit mécanisme (3) comportant un ensemble mobile (8) comprenant une barrette de coupure (5) et un équipage mobile (40) portant la barrette de coupure (5), la barrette de coupure (5) étant configurée pour pouvoir obturer plus ou moins un faisceau lumineux de manière à changer le mode de fonctionnement optique dudit projecteur (10), ledit mécanisme (3) comprenant en outre un moteur d'actionnement (6) dudit équipage mobile (40), le moteur d'actionnement (6) comportant un électroaimant (7) comprenant une bobine d'induction (61) associée à un noyau ferromagnétique (62) fixe positionné en son centre et à une carcasse métallique (64) entourant ladite bobine d'induction (61), ledit équipage mobile (40) étant mobile sous l'action dudit électroaimant (7), à l'encontre d'au moins un ressort de rappel (45), entre une première position à proximité et une seconde position à distance via un premier entrefer (h1A), dudit noyau ferromagnétique (62), ledit équipage mobile (40) étant configuré pour créer une rupture dans la continuité d'un circuit magnétique formé par ledit noyau ferromagnétique (62) ladite carcasse métallique (64) et ledit équipage mobile (40), lorsqu'il arrive à proximité dudit noyau ferromagnétique (62) dans ladite première position,
ledit mécanisme étant **caractérisé en ce que** ladite carcasse métallique (64) comprend au moins un élément d'attraction (68) configuré pour faciliter l'attraction de l'équipage mobile (40) afin de l'attirer et le maintenir dans ladite première position.

2. Mécanisme selon la revendication 1,
**caractérisé en ce que** ladite rupture de continuité forme un second entrefer (h2) dans ledit circuit magnétique.

3. Mécanisme selon la revendication 2,
**caractérisé en ce que** ledit circuit magnétique génère dans ledit second entrefer (h2) une force d'attraction sur l'équipage mobile (40) qui tend à le maintenir dans ladite première position par rapport au noyau ferromagnétique (62).

4. Mécanisme selon l'une des revendications 2 ou 3,
**caractérisé en ce que** ledit équipage mobile (40) comprend une plaque ferromagnétique (43) formée par une plaque supérieure (43a) et une plaque inférieure (43b) s'étendant de part et d'autre d'un axe de rotation (41), et **en ce que** ladite plaque inférieure (43b) se rapproche d'une branche (65) de la carcasse métallique (64), jusqu'à créer ledit second entrefer (h2), lors d'une rotation amenant la plaque supérieure (43a) à proximité du noyau ferromagnétique (62) dans la première position de l'équipage mobile (40).

5. Mécanisme selon l'une quelconque des revendications précédentes, **caractérisé en ce que** ledit au moins un élément d'attraction (68 ) est agencé d'un côté (64A) d'une branche centrale (65) de la carcasse métallique (64) au niveau de l'extrémité inférieure d'une plaque inférieure (43b) d'une plaque ferromagnétique (43), en étant recourbé vers ladite plaque inférieure (43b), et en étant agencé latéralement de manière à ne pas venir au contact de la plaque inférieure (43b) lors de la rotation de l'équipage mobile (40).

6. Mécanisme selon la revendication 5,
**caractérisé en ce que** ledit élément d'attraction (68) représente une lamelle (69) partiellement découpée dans la branche centrale (65) de la carcasse métallique (64) et recourbée vers ladite plaque inférieure (43b) dans la seconde position de l'équipage mobile (40).

7. Mécanisme selon l'une quelconque des revendications 5 ou 6, **caractérisé en ce que** ladite carcasse métallique (64) comprend au moins un élément d'attraction (68) de chacun des côtés de la branche centrale (65).

8. Mécanisme selon l'une quelconque des revendications précédentes, **caractérisé en ce que** ledit ensemble mobile (8) est configuré pour présenter une répartition de charge permettant d'obtenir une position d'équilibre par rapport à un axe de rotation (41) dudit équipage mobile (40) qui est mobile en rotation.

9. Mécanisme selon les revendications 4 et 8,
**caractérisé en ce que** ladite répartition de charge est générée par un ajout ou un retrait de matière à au moins l'une desdites plaques supérieure (43a) et inférieure (43b) de la plaque ferromagnétique (43).

10. Mécanisme selon l'une quelconque des revendications précédentes, **caractérisé en ce que** ladite barrette de coupure (5) est liée par une première extrémité longitudinale (52) à l'équipage mobile (40) et elle est pourvue vers une seconde extrémité longitudinale (53), opposée à la première extrémité longitudinale (52), d'une butée (55) flexible.

11. Mécanisme selon la revendication 10,
**caractérisé en ce que** ladite butée (55) comprend une lamelle (56) formée longitudinalement dans le corps (57) de la barrette de coupure (5).

12. Projecteur pour véhicule automobile,
**caractérisé en ce qu'**il comporte au moins un mécanisme de coupure selon l'une quelconque des revendications 1 à 11.

## Patentansprüche

1. Trennmechanismus für Scheinwerfer eines Kraftfahrzeugs, wobei der Mechanismus (3) eine bewegliche Anordnung (8) umfasst, die eine Trennleiste (5) und eine bewegliche Ausstattung (40), die die Trennleiste (5) trägt, umfasst, wobei die Trennleiste (5) dazu konfiguriert ist, ein Lichtstrahlenbündel mehr oder weniger derart abdecken zu können, dass der optische Betriebsmodus des Scheinwerfers (10) verändert wird, wobei der Mechanismus (3) weiter einen Betätigungsmotor (6) der beweglichen Ausrüstung (40) umfasst, wobei der Betätigungsmotor (6) einen Elektromagneten (7) umfasst, der eine Induktionsspule (61) umfasst, die mit einem festsitzenden ferrromagnetischen Kern (62), der in ihrer Mitte positioniert ist, und mit einem Metallgehäuse (64), das die Induktionsspule (61) umgibt, assoziiert ist, wobei die bewegliche Ausrüstung (40) unter der Wirkung des Elektromagneten (7) mindestens einer Rückstellfeder (45) gegenüber zwischen einer ersten Näherungsposition und einer zweiten Abstandposition über einen ersten Luftspalt (h1A) des ferromagnetischen Kerns (62) beweglich ist, wobei die bewegliche Ausrüstung (40) dazu konfiguriert ist, in der Kontinuität eines von dem ferromagnetischen Kern (62), dem Metallgehäuse (64) und der beweglichen Ausrüstung (40) gebildeten Magnetkreises eine Trennung zu schaffen, wenn sie in der ersten Position in die Nähe des ferromagnetischen Kerns (62) kommt,
wobei der Mechanismus **dadurch gekennzeichnet ist, dass** das Metallgehäuse (64) mindestens ein Anziehungselement (68) umfasst, das dazu konfiguriert ist, die Anziehung der beweglichen Ausrüstung (40) zu erleichtern, um diese anzuziehen und in der ersten Position beizubehalten.

2. Mechanismus nach Anspruch 1,
**dadurch gekennzeichnet, dass** die Kontinuitätstrennung einen zweiten Luftspalt (h2) im Magnetkreis bildet.

3. Mechanismus nach Anspruch 2,
**dadurch gekennzeichnet, dass** der Magnetkreis im zweiten Luftspalt (h2) eine Anziehungskraft auf die bewegliche Ausrüstung (40) erzeugt, die dazu neigt, diese in Bezug auf den elektromagnetischen Kern (62) in der ersten Position beizubehalten.

4. Mechanismus nach einem der Ansprüche 2 oder 3,
**dadurch gekennzeichnet, dass** die bewegliche Ausrüstung (40) eine ferromagnetische Platte (43) umfasst, die durch eine obere Platte (43a) und eine untere Platte (43b) gebildet wird, die sich beiderseits einer Drehachse (41) erstrecken, und dadurch, dass sich die untere Platte (43b) in der ersten Position der beweglichen Ausrüstung (40) bei einer Drehung, die die obere Platte (43a) in die Nähe des ferromagnetischen Kerns (62) führt, einem Zweig (65) des Metallgehäuses (64) nähert, bis ein zweiter Luftspalt (h2) gebildet wird.

5. Mechanismus nach einem der vorstehenden Ansprüche,
**dadurch gekennzeichnet, dass** das mindestens eine Anziehungselement (68) auf einer Seite (64A) eines zentralen Zweigs (65) des Metallgehäuses (64) auf Höhe des unteren Endes einer unteren Platte (43b) einer ferromagnetischen Platte (43) eingerichtet ist, indem es zur unteren Platte (43b) hin gekrümmt ist und indem es so seitlich eingerichtet ist, dass es bei der Drehung der beweglichen Ausrüstung (40) die untere Platte (43b) nicht kontaktiert.

6. Mechanismus nach Anspruch 5,
**dadurch gekennzeichnet, dass** das Anziehungselement (68) eine Lamelle (69) darstellt, die im zentralen Zweig (65) des Metallgehäuses (64) teilweise ausgeschnitten und zur unteren Platte (43b) hin in der zweiten Position der beweglichen Ausrüstung (40) gekrümmt ist.

7. Mechanismus nach einem der Ansprüche 5 oder 6, **dadurch gekennzeichnet, dass** das Metallgehäuse (64) mindestens ein Anziehungselement (68) auf jeder der Seiten des zentralen Zweigs (65) umfasst.

8. Mechanismus nach einem der vorstehenden Ansprüche, **dadurch gekennzeichnet, dass** die bewegliche Anordnung (8) dazu konfiguriert ist, eine Ladungsaufteilung aufzuweisen, die erlaubt, eine Gleichgewichtsposition in Bezug auf eine Drehachse (41) der beweglichen Ausrüstung (40) zu erhalten, die drehbeweglich ist.

9. Mechanismus nach den Ansprüchen 4 und 8,
**dadurch gekennzeichnet, dass** die Ladungsaufteilung durch ein Hinzufügen oder eine Entnahme von Materie an mindestens einer der oberen (43) und unteren (43b) Platte der ferromagnetischen Platte (43) erzeugt wird.

10. Mechanismus nach einem der vorstehenden Ansprüche,
**dadurch gekennzeichnet, dass** die Trennleiste (5) durch ein erstes Längsende (52) mit der beweglichen Ausrüstung (40) verbunden ist und sie zu einem zweiten Längsende (53) gegenüber dem ersten Längsende (52) hin mit einem flexiblen Anschlag (55) versehen ist.

11. Mechanismus nach Anspruch 10,
**dadurch gekennzeichnet, dass** der Anschlag (55) eine Lamelle (56) umfasst, die längslaufend im Körper (57) der Trennleiste (5) gebildet ist.

12. Scheinwerfer für Kraftfahrzeug, **dadurch gekennzeichnet, dass** er mindestens einen Trennmechanismus nach einem der Ansprüche 1 bis 11 umfasst.

## Claims

1. Cut-off mechanism for a motor vehicle headlight, said mechanism (3) comprising a movable assembly (8) that comprises a cut-off bar (5) and a movable element (40) supporting the cut-off bar (5), the cut-off bar (5) being configured to enable a light beam to be more or less obstructed in order to change the optical operating mode of said headlight (10), said mechanism (3) further comprising a motor (6) for actuating said movable element (40), the actuator motor (6) comprising an electromagnet (7) that comprises an induction coil (61) associated with a fixed ferromagnetic core (62) positioned at its centre and a metallic casing (64) surrounding said induction coil (61), said movable element (40) being movable under the action of said electromagnet (7), against at least one return spring (45), between a first, near position and a second, remote position relative to said ferromagnetic core (62) via a first gap (h1A),
said movable element (40) being configured to create an interruption in the continuity of a magnetic circuit formed by said ferromagnetic core (62), said metallic casing (64) and said movable element (40), when it comes near to said ferromagnetic core (62) in said first position,
said mechanism being **characterized in that** said metallic casing (64) comprises at least one attraction element (68) configured to facilitate the attraction of the movable element (40), so as to attract it and maintain it in said first position.

2. Mechanism according to claim 1,
**characterised in that** said interruption in continuity forms a second gap (h2) in said magnetic circuit.

3. Mechanism according to claim 2,
**characterised in that** said magnetic circuit generates, in said second gap (h2), an attraction force on the movable element (40) that tends to maintain it in said first position relative to the ferromagnetic core (62).

4. Mechanism according to either claim 2 or claim 3,
**characterised in that** said movable element (40) comprises a ferromagnetic plate (43) formed by an upper plate (43a) and a lower plate (43b) extending on both sides of a rotational shaft (41), and **in that** said lower plate (43b) approaches a branch (65) of the metallic casing (64), until said second gap (h2) is created, during a rotation that brings the upper plate (43a) near to the ferromagnetic core (62) in the first position of the movable element (40).

5. Mechanism according to any of the preceding claims,
**characterised in that** said at least one attraction element (68) is arranged on one side (64A) of a central branch (65) of the metallic casing (64) at the lower end of a lower plate (43b) of a ferromagnetic plate (43), by being curved towards said lower plate (43b) and by being arranged laterally so as not to come into contact with the lower plate (43b) during the rotation of the movable element (40).

6. Mechanism according to claim 5,
**characterised in that** said attraction element (68) embodies a segment (69) that is partially cut out of the central branch (65) of the metallic casing (64) and is curved towards said lower plate (43b) in the second position of the movable element (40).

7. Mechanism according to either claim 5 or claim 6,
**characterised in that** said metallic casing (64) comprises at least one attraction element (68) on each of the sides of the central branch (65).

8. Mechanism according to any of the preceding claims,
**characterised in that** said movable assembly (8) is configured to have a load distribution that allows a balanced position to be obtained relative to a rotational shaft (41) of said movable element (40) that is rotationally movable.

9. Mechanism according to claim 4 and claim 8,
**characterised in that** said load distribution is generated by adding or removing material to/from at least one of said upper (43a) and lower (43b) plates of the ferromagnetic plate (43).

10. Mechanism according to any of the preceding claims,
**characterised in that** said cut-off bar (5) is connected by a first longitudinal end (52) to the movable element (40) and it is provided, towards a second longitudinal end (53) opposite the first longitudinal end (52), with a flexible stop (55).

11. Mechanism according to claim 10,
**characterised in that** said stop (55) comprises a segment (56) formed longitudinally in the body (57) of the cut-off bar (5).

12. Motor vehicle headlight,
**characterised in that** it comprises at least one cut-off mechanism according to any of claims 1 to 11.
